# EUROPEAN PATENT APPLICATION

(11) **EP 1 732 277 A1**
(43) Date of publication of application: **13.12.2006**
(21) Application number: 06252813.8
(22) Date of filing: 31.05.2006
(51) Int. Cl.: H04L 12/58

(54) **Enhanced messaging services**

(30) Priority: 09.06.2005 GB 0511748
(71) Applicant: Nortel Networks Limited, St.Laurent, Quebec H4S 2A9 (CA)
(72) Inventor: Domville, Ian, Wallingford Oxfordshire OX10 6RZ (GB); Price, David, Lower Earley Reading Berkshire RG6 4HS (GB)
(74) Representative: Hermele, Daniel Stephen

(57) **Abstract**

In 3GPP architected networks, IMS application servers offer the possibility of deploying feature-rich services to users. To enable legacy messaging services, such as SMS, to take advantage of the possibilities offered, the conventional message handling scheme is modified such that the SMS, or other message, is delivered to an application server (such as a 3GPP IMS application server) in the recipient's home network rather than to the recipient's currently registered MSC or SGSN. The application server is then able to handle the message to provide an enhanced service.

## Description

### FIELD OF THE INVENTION

The present invention relates to enhanced messaging services. In particular, but not exclusively, the present invention relates to the provision on enhanced messaging services in respect of messages sent to a terminal in a network such as a GSM/UMTS network having a 3GPP IP Multimedia Subsystem (IMS) architecture.

### BACKGROUND TO THE INVENTION

It is desired to enable network operators to deliver a rich set of voice and multi-media features to the user.

Personal Communicator, from Nortel, is a user-centric solution focused on delivering the integration of multiple existing and new services which are today isolated such as voice, messaging, presence, directories, web browsing, sharing, etc. in order to deliver a richer, yet simpler, user experience.

This integration includes multiple user device types which can be used, within the device capabilities, to access the integrated set of services. Those services are made available across wireless and broadband plus WLAN access, using single mode or multi-mode user devices. In particular, Personal Communicator supports a new generation of dual-mode mobile handsets, capable of traditional cellular access as well as supporting WLAN access technologies.

The Personal Communicator leverages Nortel's Multimedia SIP Server, the MCS 5200 evolved seamlessly into the 3GPP standards based IMS architecture. Nortel's architecture for Personal Communicator delivers a feature rich voice and multimedia service accessible from dual-mode handsets. Highlights of the solution include:
- IMS compliant architecture, enabling seamless integration with an IMS-based network.
- Seamless handover of voice calls when the terminal moves between WiFi and cellular coverage. Handover is available for all calls - incoming and outgoing, internal and external - and irrespective of whether the call was initiated when the terminal was in WiFi or cellular mode.
- Personal Communicator is standards-based, including intercepting the emerging 3GPP CIVCS standard for mobility and handover between IMS and Circuit Switched domains.
- HLR integration, eliminating the need for a separate MSISDN and enabling optimal breakout from the IMS domain when using a cellular network for access.
- Service consistency by delivering all services, features and supplementary services from the same service platform (IMS), irrespective of the access used (except where the access has bandwidth limitations that restrict the service).
- Multimedia services in addition to voice calls. Video, instant messaging, presence, file transfer, application sharing, shared whiteboarding and integrated directory access can all be provided (subject to the capabilities of the handset in use and any bandwidth limitations of the access being used).
- A Personal Agent providing individually customisable rules for handling incoming calls, using criteria such as Time of Day and CLI. The Personal Agent can offer sequential and/or simultaneous ringing of the mobile terminal, a multimedia PC client, PBX extensions and external lines, such as the user's residential telephone number. Calls can be routed to voicemail and the Personal Agent can send the calling party Instant Messages to advise them of how the call is being handled.
- Integrated multimedia PC client for desktop and laptop PCs, enabling access to all Personal Communicator services from a PC, including interaction between PC users and mobile terminal users.

Wireless and wireline services are converging. The beginning of the trend towards convergence began with release 5 of the 3GPP IMS standards, which enables the delivery of IP-based voice and multimedia services for cellular networks. However, engineering the cellular access network to deliver Voice over IP (VoIP) with acceptable Quality of Service (QoS) is not trivial and inevitably uses up access capacity that must be traded-off with other service demands. Consequently, it is envisaged that the majority of voice traffic will continue to be delivered using circuit-based methods across the cellular access network for quite some time to come.

Recognising the need for greater capacity to exploit the IMS architecture, release 6 of the 3GPP IMS standards expands access to include WLAN or WiFi in which the only defined mechanism for delivering voice service is VoIP. In contrast to the cellular access of release 5, it is possible to cost-effectively engineer a WiFi access network to deliver VoIP with QoS.

The 3GPP GSM/UMTS standards define a routing mechanism to enable SMS messages to be routed to a subscriber, in summary this is:

When a subscriber sends an SMS, the message and the indicated recipient's MSISDN are sent to the sender's SMS Service Centre (SMSC). The SMSC then uses the recipient's MSISDN to identify the recipient's home network and sends a routing query to that network's Home Location Register (HLR). If the recipient is registered the HLR replies with information including the currently registered MSC and/or SGSN. The sender's SMSC then attempts to send the SMS by interacting directly with the MSC or SGSN identified by the HLR response.

However, in 3GPP, SMS and other popular legacy messaging services such as email, EMS, MMS and IM are unable to exploit the feature-rich capabilities of 3GPP IMS.

### OBJECT TO THE INVENTION

The present invention provides a solution to enable such messaging services to exploit enhanced service features.

### SUMMARY OF THE INVENTION

The essence of the present invention is to modify the conventional message handling scheme such that the SMS, or other message, is delivered to an application server (such as a 3GPP IMS application server) in the recipient's home network rather than to the recipient's currently registered MSC or SGSN. In an embodiment of the present invention, the IMS application server is based on Nortel's Personal Communicator application.

Advantageously, the present invention enables new services to be applied to SMS termination taking account of subscriber preferences, current mode of access and operator policies, as enabled by the application server. Such a capability is currently not possible in the 3GPP specifications defined. Examples of new services would include but are in no way limited to:
- transforming incoming SMS messages into email messages and forwarding them to the user (eg where the user has mobile switched off but is active on a personal computer);
- responding to the user with web page URL providing range of access options;
- translating the text of SMS into recipient's preferred language;
- delivering the messaghe as text to speech;
- applying virus scanning;
- providing spam filtering;
   ...and so on.

According to one aspect of the present invention there is provided a method of enabling the provision of an enhanced messaging service in a communications network, comprising: receiving a first routing request for an address of a network node through which a user terminal can be accessed to enable delivery of a message to the user terminal; and providing a response to the first routing request, the response indicating an application service address instead of an address of a network node through which a user terminal can be accessed.

According to another aspect of the present invention there is provided a method of enabling the provision of an enhanced messaging service in a communications network, comprising: receiving a message for delivery to a user terminal; and sending a second routing request for an address of a network node through which a user terminal can be accessed, the second routing request being in respect to the message and comprising a flag indicating that an address of a network node through which a user terminal can be accessed should be provided in response; receiving a response to the second routing request, the response indicating an address of a network node through which a user terminal can be accessed; and using the network node address provided to provide an enhanced service to a user of the user terminal in respect of the message.

According to another aspect of the present invention there is provided a location register of a communications network for enabling the provision of an enhanced messaging service, comprising: an interface for receiving routing requests; a processor arranged in use to provide a response to a first routing request for an address of a network node through which a user terminal can be accessed to enable delivery of a message to the user terminal, the response indicating an application service address instead of an address of a network node through which a user terminal can be accessed; and an interface for sending the response.

According to another aspect of the present invention there is provided a application server of a communications network for enabling the provision of an enhanced messaging service, comprising: an interface for receiving a message for delivery to a user terminal; and a processor arranged in use to generate a second routing request for an address of a network node through which a user terminal can be accessed, the second routing request being in respect to the message and comprising a flag indicating that an address of a network node through which a user terminal can be accessed should be provided in response; an interface for sending the second routing request; an interface for receiving a response to the second routing request, the response indicating an address of a network node through which a user terminal can be accessed; and a processor arranged in use to provide an enhanced service to a user of the user terminal in respect of the message using the network node address provided.

Computer software for performing any of the above method aspects is also provided. A system comprising the location register and application server is also provided.

Further aspects and advantages of the present invention will be apparent from the following.

There now follows by way of example only a detailed description of preferred embodiments of the present invention in which:

### BRIEF DESCRIPTION OF THE DRAWING

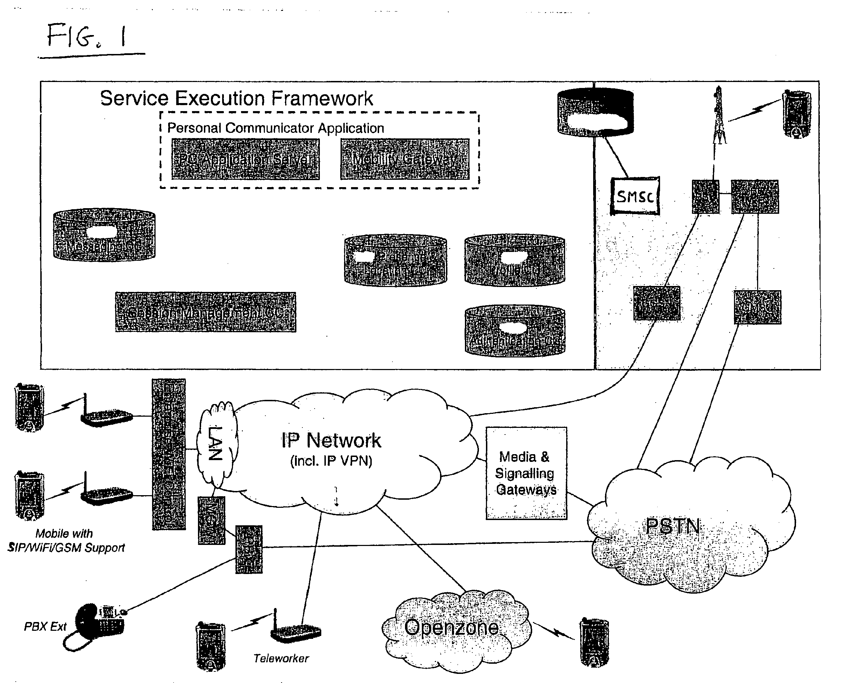

Figure 1 shows a typical converged 3GPP network architecture suitable for implementing the present invention.

### DETAILED DESCRIPTION

Nortel's Personal Communicator is a SIP-enabled software application that runs on general purpose computing hardware to provide end-users with complete flexibility in how they conduct their communications across a range of devices.

A typical overall network architecture is illustrated in Figure 1. The key components of the architecture include:
- Single or multi mode handsets with SIP clients.
- WiFi Access Points and WiFi controllers
- IP PBXs (which may be TDM PBXs upgraded to IP PBXs) or the deployment of media gateways at the customer premises to interconnect with TDM PBXs.
- The Personal Communicator (PC) Application, which consists of:
   o The Personal Communicator Application Server for delivering a rich set of voice and multimedia features, including the user's Personal Agent that enables users to establish call handling rules that determine how incoming calls should be handled. The Personal Communicator Application Server is based upon the MCS 5200. (Note that some multimedia services, such as Instant Messaging (IM) or Presence, can be delivered by alternative platforms such as the Messaging CC and Presence CC.)
   o A Mobility Gateway that enables the IMS to interact with the HLR using MAP. The Mobility Gateway is a new development being delivered as part of the Personal Communicator solution. It incorporates both the CIVCS functionality and the Routing Control Function (RCF), which uses Presence information to determine how to route the final call leg to the terminal.
- A Session Management CC that decouples the Personal Communicator Application from the details of managing sessions other than those aspects of call management that Personal Communicator is responsible for. Specifically, the Personal Communicator Application must be able to instruct the Session Management CC to establish the final call leg to the user handset either over the IP network (ie over WLAN) or over the cellular network.
- Media Signalling Gateways (MGW / SGW) to provide connectivity to/from the PSTN/PLMN. These are under the control of the MGCF component of the Session Management CC.
- Authentication and Profile CCs. For trial purposes, it will be possible to use the MCS 5200's built-in capabilities. Alternatively, the Nortel HSS could be deployed to provide these capabilities.
- Presence & Location CC. As noted above, the MCS 5200's native capabilities can be used to deliver presence services in an initial trial. In the longer term, it is anticipated that the performance demands placed upon a presence server will make it beneficial to adopt a dedicated presence engine and the Personal Communicator solution will make use of that.
- Messaging CC. While MCS 5200 can support Instant Messaging, the delivery of SMS, MMS and other messaging services will require the deployment of a fully capable Messaging CC.
- A Home Location Register (HLR).
- An SMS Service Centre (SMSC) - note the SMSC of interest here is the SMSC of the SMS message originating terminal which may be in the network as shown in the Figures (ie if the originating terminal is in the same network as the recipient terminal) or may be in another network.

Note that it is assumed that a suitable IP core is available, including the provision of VPNs for enterprises to provide IP connectivity between sites and enable IP traffic to breakout to the SEF and/or to the MGWs.

As described above, the Personal Communicator Application consists of two components - the Personal Communicator Application Server and the Mobility Gateway. The third key component of the solution is the intelligent SIP client on the handset.

Personal Communicator is capable of sending and receiving Short Message Service (SMS) messages via an SMS service centre (SMSC) - this functionality is delivered by the Mobility Gateway. This enables Personal Communicator to map between SMS messages and IMs, effectively decoupling the sending mode (IM or SMS) from the delivery mode (IM or SMS).

A more comprehensive solution could be offered if the Messaging CC is able to support a wider range of messaging options. Personal Communicator would no longer directly support IM or SMS messages, but would leave messaging to the Messaging CC. However, Personal Communicator could potentially complement the Messaging CC's capabilities in two ways. Firstly, the Personal Agent can provide rules for handling incoming messages, enabling the user to specify how those messages should be handled, including options for automatically replying to them. Secondly, the Mobility Gateway can provide the Messaging CC with access to a MAP interface to the HLR, enabling the Messaging CC to acquire the information necessary to deliver messages as an SMS message or to receive SMS messages from the handset for forward delivery. Neither of these capabilities would be required if the Messaging CC has those capabilities built-in.

### Incoming SMS Messages

Conventionally, when a mobile phone user sends an SMS message, it is initially delivered to the SMSC within their home network. This SMSC will interrogate the target mobile's HLR to know where to send the message and will expect to receive the address of a serving MSC or a serving SGSN - the SMS message is then delivered using that address.

If for any reason the message cannot be delivered, the SMSC registers with the HLR for notification of a change in the mobile terminal's status that would enable it to receive the SMS message. The HLR arms an appropriate trigger and when the mobile's status changes the SMSC is sent the new address for message delivery (which may or may not be the same as the previous one). This continues until the message is delivered or the message expires and is discarded.

With Personal Communicator, SMS messaging is more fully integrated and messages can be delivered as SMS messages or as Instant Messages, which includes the option of delivery as an IM to a desktop PC client if the handset is out of coverage. By combining a powerful Messaging CC with the Personal Communicator, the application could deliver a truly comprehensive and flexible messaging capability.

Full integration of SMS as part of a total messaging solution depends upon the HLR.

Where the HLR only supports the standard MAP functionality, the process described above works as usual when the handset is within the coverage of the cellular network. In other words, provided the handset is within cellular coverage it will be registered with the cellular network and all SMS messages will be delivered to the handset in the conventional manner.

If the handset moves out of cellular coverage but retains WiFi coverage, it notifies the Personal Communicator application. When this situation arises, the Personal Communicator application registers itself as the serving MSC or SGSN with the HLR (via the Mobility Gateway). Consequently, SMSCs will send incoming SMS messages to the Mobility Gateway. These SMS messages are then converted to Instant Messages and delivered to the handset over WiFi.

Personal Communicator could pass those messages on to the Messaging CC for more sophisticated treatment, but since the handset will have cellular coverage most of the time the majority of SMS messages will be delivered directly to the handset; only a small percentage of SMS messages will reach the Messaging CC for more sophisticated handling.

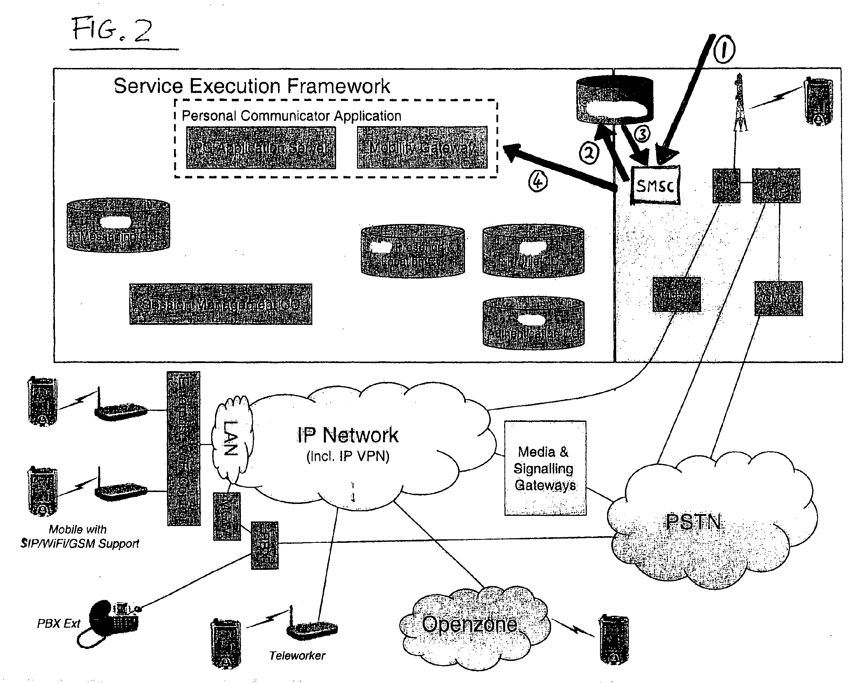

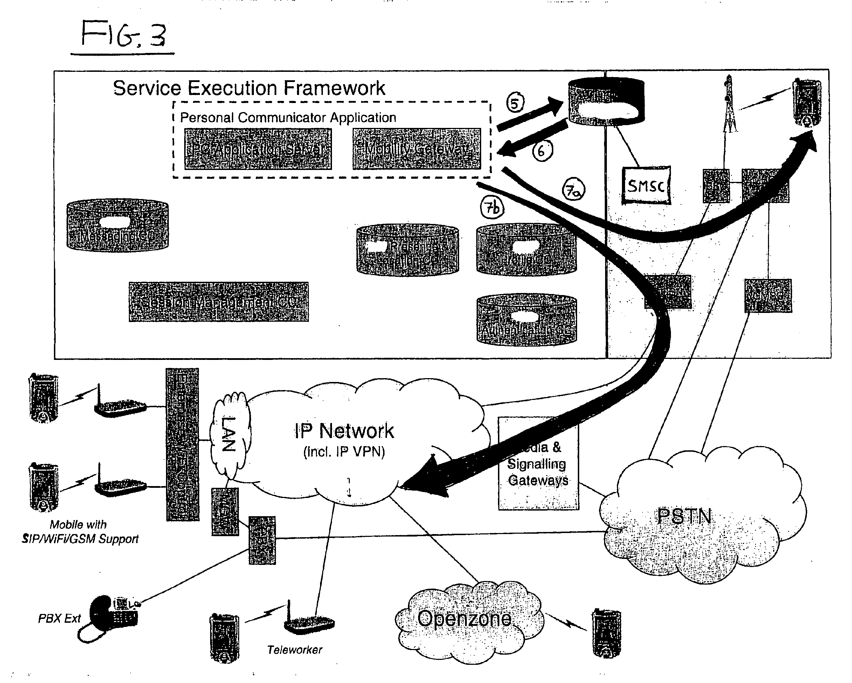

According to the present invention, tighter integration may be achieved by arranging the HLR and Personal Communicator application to support an enhanced capability as show in Figures 2 and 3.

Referring to Figure 2, when a mobile user sends an SMS message, it is initially delivered (step 1) to the SMSC within their home network. In the Figures this is assumed to be the same network as the target mobile terminal, but it will be appreciated that the SMSC may be in a different network. The SMSC will interrogate (step 2) the target mobile's HLR to know where to send the message using a dip. The SMSC will expect to receive the address of a serving MSC or a serving SGSN as is convention.

However, according to the present invention, instead of returning the address of the current serving MSC or serving SGSN in response to a conventional SMSC dip, the HLR always returns (step 3) the address of the Mobility Gateway. This address is statically provisioned for every user. (Note that this is a change from the normal HLR behaviour, as described above.) As a result, all originating SMS messages are delivered (step 4) to the Personal Communicator application via the Mobility Gateway. As will be described below, if the SMSC dip is non-conventional modified request by virtue of having an extension flag set, then the SMSC will return the address of the current serving MSC or serving SGSN as is conventional.

If a more powerful Messaging CC has been combined with Personal Communicator, all these SMS messages can be passed on to the Messaging CC. The Messaging CC can then handle the incoming messages in a variety of ways - this might include converting them to email, delivering them as text to speech, delivering as an Instant Message over SIP or delivering them as SMS messages over the cellular network.

If Personal Communicator is not integrated with a Messaging CC, then the Personal Communicator will either deliver incoming messages as Instant Messages over the SIP interface or deliver them as SMS messages over the cellular network.

Referring to Figure 3, in order to deliver the messages over cellular network, the Personal Communicator or the Messaging CC (via the Mobility Gateway) will execute an SMSC dip (step 5) on the HLR. This dip is a modified request (by virtue of having an extension attribute or flag set) that overrides the statically provisioned response (which is the address of the Mobility Gateway) and the SMSC provides (step 6) the conventional result of a dip by an SMSC, ie the address of the serving MSC or serving SGSN. Using this information, the Personal Communicator or the Messaging CC can deliver the message to the serving MSC or serving SGSN (either via the Mobility Gateway, which interfaces to the SS7 network and supports the necessary MAP protocol, or another route) for onward delivery to the recipient user terminal (step 7a).

If for any reason the delivery fails, the Messaging CC or the Personal Communicator can either deliver the message over a different mechanism or register with the HLR for notification of a change in the terminal's status. As described above, this arms the HLR and a change in status will trigger a new message to the IMS with the a new address for message delivery.

Moreover, the Messaging CC or the Personal Communicator may deliver the message or a derivative message over a different mechanism (step 7b) or may take other action or no action, by virtue of user preference or network policy settings as required. For example, the Messaging CC or the Personal Communicator may deliver the message or a derivative message over an IP network to the recipient terminal via WiFi or to a PBX (eg as a text to speech derivate message) or to a personal computer (eg as an email). In this way the message need not be delivered to the user terminal as an SMS, but may be delivered in some other format or not at all.

To deliver this tighter integration, the HLR must support two enhancements over a conventional HLR. Firstly, it must return a statically provisioned address in response to a normal SMSC dip. Secondly, it must support a modified SMSC dip that accesses the conventional HLR response to an SMSC dip.

To support enhanced capability, the following modifications are performed:
- In the HLR define a table of application service records (ASR), each containing appropriate routing records for application services;
- Extend the HLR subscription schema to incorporate an optional reference to an application service record (ASR);
- Incorporate an extension attribute in the MAP SRI-SM request using the standard MAP extension mechanism (3GPP TS29.002);
   o When the modified HLR receives an SRI-SM request from an SMSC without the extension attribute or flag and the subscriber record contains an ASR reference, the HLR will respond with appropriate information from the referenced ASR (e.g. representing the application service as an E.164 MSC Number) to cause the SMSC to forward the SMS to the designated application service. If the subscriber record does not contain an ASR the standard response (currently registered MSC and/or SGSN) as defined in 3GPP TS29.002 will be returned.
   o When the modified HLR receives an SRI-SM request with the extension attribute or flag from the application service and the subscriber record contains an ASR reference, the HLR will respond with the currently registered MSC and/or SGSN as defined in 3GPP TS29.002. If the subscriber record does not contain an ASR then the extension attribute will be ignored and a standard response defined in TS29.002 together with an extension parameter to indicate ASR is not activated will be returned.
   o Use of the 3GPP MAP standard extension mechanism will result in un-modified HLR's ignoring the extension and responding in the standard way to requests.
- Arrange for an application service to emulate an MSC or SGSN to act as a recipient of messages forwarded by an SMSC and to emulate an SMSC to send SRI-SM requests to an HLR;
- Modify an HLR to incorporate extension attributes in the Sh interface (TS29.328 and TS29.329) to enable an IMS compatible application server to modify or request ASR information and to query SMS related routing information.

By forcing all SMS messages to be routed via the Personal Communicator and/or the Messaging CC, messaging becomes a more integrated service. Furthermore, it is relatively easy to introduce enhanced services.

### Incoming Instant Messages

Incoming instant messages are either received by the Personal Communicator or by a specialised Messaging CC. The two most direct methods of delivery are either as an IM over the SIP interface or as an SMS message over the cellular network as described above. The Messaging CC may also offer additional options, such as email delivery.

### Outgoing Messages

Users will be able to send outgoing messages either as an IM or as an SMS. In either case, the terminal will attempt to deliver the message to either the Personal Communicator or a Messaging CC over the packet network in a SIP message. If this is not possible, the terminal will fallback to sending an SMS message to the IMS (i.e. to either the Personal Communicator or a Messaging CC) - this message will be delivered through the Mobility Gateway (the address of which is provisioned within the handset as its SMSC).

Personal Communicator will then either forward the message as an IM (to another user or to another compatible IM system) or pass the message to a conventional SMSC in the cellular network. It is anticipated that an SMSC will not only offer a wider range of delivery options, but when the message is to be delivered as an SMS will also be able to operate as a fully functional SMSC, which will interact appropriately with the HLR of the target user.

While the present invention has been described above in relation to the feature enhancement of SMS message termination in a 3GPP architected network, it will be clear to one skilled in the art that the present invention applies to any message service including but not limited to email, EMS, MMS, IM, video message and so on. Likewise the present invention applies to any network architecture in which an application server may be provided including but not limited to 4G and future fixed or wireless network architectures.

## Claims

1. A method of enabling the provision of an enhanced messaging service in a communications network, comprising:
receiving a first routing request for an address of a network node through which a user terminal can be accessed to enable delivery of a message to the user terminal; and
providing a response to the first routing request, the response indicating an application service address instead of an address of a network node through which a user terminal can be accessed.

2. A method according to claim 1, comprising
storing an application service record in respect of the user or user terminal and wherein the application service address provided is determined from the application service record.

3. A method according to claim 1, comprising:
receiving a second routing request for an address of a network node through which a user terminal can be accessed, the second routing request being in respect to the message and comprising a flag indicating that an address of a network node through which a user terminal can be accessed should be provided in response; and
providing a response to the second routing request, the response indicating an address of a network node through which a user terminal can be accessed.

4. A method according to claim 4, comprising:
using the network node address provided to provide an enhanced service to a user of the user terminal in respect of the message.

5. A method according to claim 1, wherein the first routing request is received by a location register of the network.

6. A method according to claim 3, wherein the second routing request is received by a location register of the network.

7. A method according to claim 4, wherein the enhanced service is provided by an application server of the network.

8. A method according to claim 1, wherein the message is one selected from an SMS, an EMS, an MMS, a video message, an email and an instant message.

9. A method according to claim 1, wherein the network is a 3GPP network.

10. A method of enabling the provision of an enhanced messaging service in a communications network, comprising:
receiving a message for delivery to a user terminal; and
sending a second routing request for an address of a network node through which a user terminal can be accessed, the second routing request being in respect to the message and comprising a flag indicating that an address of a network node through which a user terminal can be accessed should be provided in response;
receiving a response to the second routing request, the response indicating an address of a network node through which a user terminal can be accessed; and
using the network node address provided to provide an enhanced service to a user of the user terminal in respect of the message.

11. A method according to claim 10, wherein the second routing request is sent by an application server of the network.

12. A method according to claim 10, wherein the second routing request is sent to a location register of the network.

13. A method according to claim 10, wherein the enhanced service is provided by an application server of the network.

14. A method according to claim 10, wherein the message is one selected from an SMS, an EMS, an MMS, a video message, an email and an instant message.

15. A method according to claim 10, wherein the network is a 3GPP network.

16. A location register of a communications network for enabling the provision of an enhanced messaging service, comprising:
an interface for receiving routing requests;
a processor arranged in use to provide a response to a first routing request for an address of a network node through which a user terminal can be accessed to enable delivery of a message to the user terminal, the response indicating an application service address instead of an address of a network node through which a user terminal can be accessed; and
an interface for sending the response.

17. A location register according to claim 16, comprising
a data store storing an application service record in respect of the user or user terminal and wherein the application service address provided is determined from the application service record.

18. A location register according to claim 16, wherein the processor is arranged in use to provide a response to a second routing request for an address of a network node through which a user terminal can be accessed, the second routing request being in respect to the message and comprising a flag indicating that an address of a network node through which a user terminal can be accessed should be provided in response, the response indicating an address of a network node through which a user terminal can be accessed.

19. A location register according to claim 16, wherein the location register is an HLR.

20. A location register according to claim 16, wherein the message is one selected from an SMS, an EMS, an MMS, a video message, an email and an instant message.

21. A location register according to claim 16, wherein the network is a 3GPP network.

22. An application server of a communications network for enabling the provision of an enhanced messaging service, comprising:
an interface for receiving a message for delivery to a user terminal; and
a processor arranged in use to generate a second routing request for an address of a network node through which a user terminal can be accessed, the second routing request being in respect to the message and comprising a flag indicating that an address of a network node through which a user terminal can be accessed should be provided in response;
an interface for sending the second routing request;
an interface for receiving a response to the second routing request, the response indicating an address of a network node through which a user terminal can be accessed; and
a processor arranged in use to provide an enhanced service to a user of the user terminal in respect of the message using the network node address provided.

23. A application server according to claim 22, wherein the second routing request is sent to a location register of the network.

24. A application server according to claim 10, wherein the message is one selected from an SMS, an EMS, an MMS, a video message, an email and an instant message.

25. A application server according to claim 1, wherein the network is a 3GPP network.

26. Software arranged in use to perform the method of claim 1.

27. Software arranged in use to perform the method of claim 10.

28. A system comprising the location register of claim 16 and the application server of claim 22.
